Europäisches Patentamt

(19) European Patent Office

Office européen des brevets

(11) Publication number: **0 061 069**
**B1**

(12) **EUROPEAN PATENT SPECIFICATION**

(45) Date of publication of patent specification: **04.12.85**

(51) Int. Cl.⁴: **G 11 B 5/187, G 11 B 5/127**

(21) Application number: **82101909.8**

(22) Date of filing: **10.03.82**

(54) **Magnetic transducer.**

(30) Priority: **10.03.81 JP 33626/81**
**11.05.81 JP 68114/81**
**18.11.81 JP 186026/81**

(43) Date of publication of application:
**29.09.82 Bulletin 82/39**

(45) Publication of the grant of the patent:
**04.12.85 Bulletin 85/49**

(84) Designated Contracting States:
**DE FR GB NL**

(56) References cited:
**DE-A-1 474 335**
**DE-A-3 103 767**
**JP-A-55 160 321**
**US-A-3 598 925**
**US-A-4 017 899**
**US-A-4 170 059**

(73) Proprietor: **SANYO ELECTRIC CO., LTD.**
**18, Keihanhondori 2-chome**
**Moriguchi-shi Osaka-fu (JP)**

(72) Inventor: **Yasuda, Isao**
**11-11, Hoshidayamate 4-chome**
**Katano-shi Osaka-fu (JP)**
Inventor: **Koyama, Kazuaki**
**Sanyo Denki Shintamiya-Ryo, 10-49**
**Asahigaoka-cho**
**Hirakata-shi Osaka-fu (JP)**
Inventor: **Kawai, Yoshihiko**
**11-23, Osumigaoka 1-chome**
**Tanebe-cho Tsuzuki-gun Kyoto-fu (JP)**
Inventor: **Yoshisato, Yorinobu**
**65-9, Nasutsukuri Kitamachi**
**Hirakata-shi Osaka-fu (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a magnetic transducer comprising a center core of a material having a large saturation flux density, said center core having an opening formed therein for winding coil means through and a head gap extending from said opening to one side of said center core; a pair of reinforcing cores each comprising a glass member and a plate made of magnetic material, said magnetic plate fixedly connected to said glass member and receiving a recess formed therein at an intermediate portion of a side which is held in contact with said glass member, said recess defining a window together with said glass member, said window being aligned with said opening for receiving said coil means; said pair of reinforcing cores sandwiching said center core such that the glass members are located on opposite sides, respectively, of the center core where said head gap is formed, and that said one side of the center core is in flush with, or projects from, respective side faces of said glass members. Such a transducer is known from DE—A—1474335.

A magnetic transducer of this kind is known from US—A—3 598 925 has a center core made of sendust and members for reinforcing the center core which are made of a non-magnetisable alloy similar in physical property to the sendust. The hardness of these members is substantially equal to or a little less than that of the core. The use of the non-magnetisable alloy is advantageous so far as the mechanical characteristics of the magnetic head are concerned. On the other hand it has the disadvantage that it may adversely effect the magnetic characteristic, especially, the reproduction output characteristic of the magnetic head. Therefore problems due to eddy current have to be expected.

On the other hand from US—A—4 017 899 a magnetic head is known wherein cutouts are defined in the ferrite core to reduce the width of the head gap, which cutouts receive respective ceramic members of a material which is so chosen as to wear slightly faster than the ferrite surfaces. This technique is advantageous where a material tending to be effected by a loss of eddy current is used for the core. But where a magnetisable metallic material having a relatively low intrinisic resistance is used for the core, and especially in the case of a magnetic head for use in recording and/or reproducing a high frequency signal such as a television signal, it does not result in a sufficient and satisfactory reproduction output characteristic.

It is the object of the present invention to provide a magnetic transducer of the known kind which will not wear doen even after a long period of operation and which has good working characteristics even after extended time of use of the transducer.

According to the invention this object is solved in a transducer of the known kind as set out in the first part of claim 1 by the features that each of the glass members has an abrassiveness resistivity which is smaller than that of the center core, and is formed with a projection which engages in said recess formed in said magnetic plate for the rigid connection between the magnetic plate and the glass member. By means of the projection which engages in said recess any possible lateral displacement of the glass layer relative to the ferrite plate is effectively avoided. Therefore a magnetic transducer is provided which shows good working characteristics even after a long time of use.

Advantageously the centre core is made of sendust. Since sendust is a material having a very large saturation flux density it is particularly suitable for recording or reproducing signals on tapes of high coercivity.

The present invention furthermore relates to a method for manufacturing a reinforcing core for use in a magnetic transducer such that a center core is fixedly sandwiched between a pair of reinforcing cores, said method comprising the steps of preparing a rectangular ferrite block having a groove formed in its one surface; preparing a rectangular glass sheet having a predetermined softening temperature; placing said rectangular glass sheet over said rectangular ferrite block on said one surface formed with said groove to define a composite block, said groove defining an elongated through-hole together with said glass sheet; and subsequently comprising the steps of shaping the composite block into a desired configuration; and slicing said composite block along a plane perpendicular to said through-hole.

Such a method is known from US—A—41 70 059. According to this known method, for enabling the surfaces of the respective reinforcement blocks to be connected together, a glass layer formed by the use of sputtering technic is utilized.

The method according to the invention comprises prior to the two last mentioned steps further the steps of inserting a rod through said through-hole; heating said composite block according to a programmed temperature for welding said glass sheet on said ferrite block and for melting said glass sheet to permit the droop down of a part of said glass sheet into said groove over said rod; and removing said rod.

By the method according to the invention projections are produced, because part of the glass material droops down into a recess in the plate of magnetic material. This projection serves to avoid any possible lateral displacement of the glass layer relative to the ferrite plate.

These objects and features of the present invention will become apparent from the following description taken in conjunction with preferred embodiment thereof with reference to the accompanying drawings, throughout which like parts are designated by like reference numerals, and in which:

Fig. 1 is a perspective view of magnetic transducer according to the present invention;

Fig. 2 is a front view of the magnetic transducer shown in Fig. 1;

Fig. 3 is a top plan view of the magnetic transducer shown in Fig. 1;

Fig. 4 is a cross-sectional view taken along a line IV—IV shown in Fig. 2;

Fig. 5 is an exploded view of the magnetic transducer before the grinding process;

Fig. 6 is a front view of the magnetic transducer before the grinding process;

Fig. 7 is a perspective view of a composite block prepared for making numbers of slices of reinforcing core;

Fig. 8 is a graph showing a programmed temperature for heating the composite block of Fig. 7;

Fig. 9 is a graph showing an output characteristic of three samples of magnetic transducers with respect to time change;

Fig. 10 is a graph similar to Fig. 9, but particularly showing the output characteristic of another three samples;

Fig. 11 is view similar to Fig. 2, but particularly showing a modification thereof; and

Fig. 12 is a graph showing relation between spacing loss and distance of the spacing or wavelength of the signal.

Description of the preferred embodiments

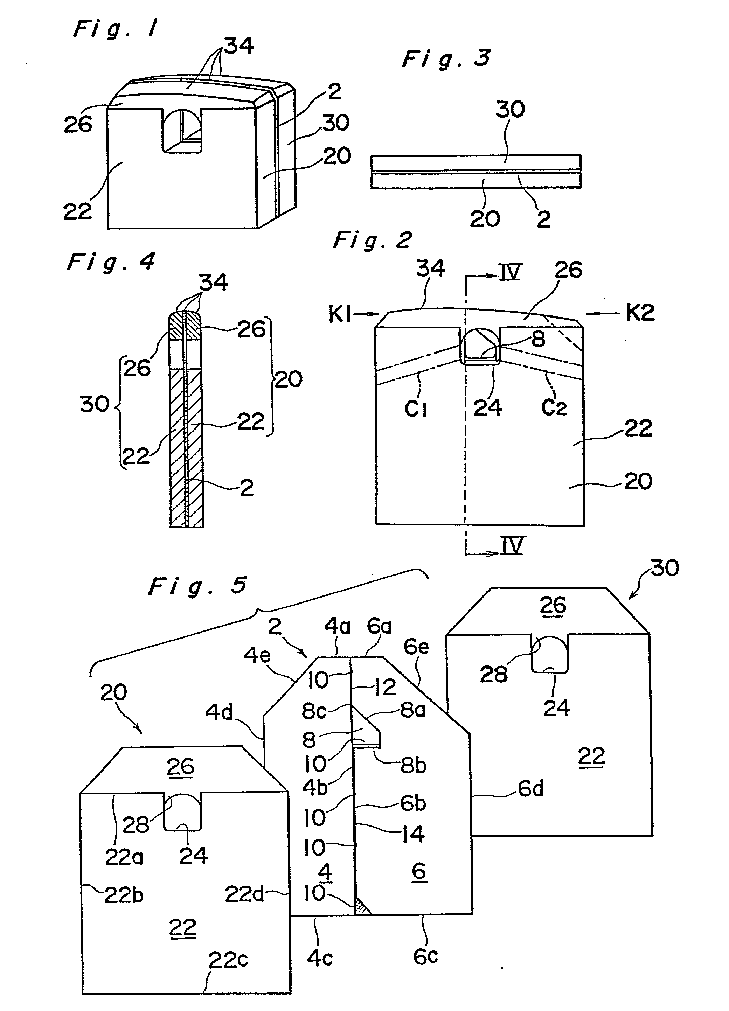

Referring to Figs. 1, 2 and 3, a magnetic transducer according to the present invention comprises a center core 2 and a pair of reinforcing cores 20 and 30 sandwiching the center core 2. The center core 2 comprises two sections 4 and 6 which are bonded together at their sides to define a plain core member. Each of the reinforcing cores 20 and 30 comprises a ferrite plate 22 and a glass member 26 rigidly mounted on the ferrite plate 22. A further detail of the magnetic transducer of the present invention will become apparent from the following description take in relation to the steps for manufacturing the magnetic transducer.

Referring particularly to Fig. 5, the center core 2 is prepared by two sheets 4 and 6, each formed by a material having a large saturation flux density, such as sendust, and each having a thickness corresponding to the thickness of track (for example 29 micron) that will be formed on a magnetic tape (not shown). The sendust sheet 6 shown on the right-hand side in Fig. 5 has a rectangular configuration defined by four sides 6a, 6b, 6c and 6d with a slanted side 6e. In the sendust sheet 6, a recess 8 is formed in the side 6b at a position close to the upper side 6a. The recess 8 is defined by a slanted side 8a which extends approximately parallel to the side 6e, and a bottom side 8b which extends perpendicularly to the side 6d. Furthermore the sendust sheet 6 has a corner defined by the sides 6b and 6c trimmed for the purpose of deposition of bonding agent.

The other sendust sheet 4 has a configuration similar to that of the sheet 6, but without the recess. More particularly, the sendust sheet 4 is defined by sides 4a, 4b, 4c, 4d and 4e. The sendust sheets 4 and 6 are joined side-by-side to define a single plain sheet, and their sides 4b and 6b are bonded with each other by the deposition of suitable bonding agent, such as silver alloy brazing material, at locations indicated by a reference character 10. When the sendust sheets 4 and 6 are joined together, the recess 8 now defines a window with its upper end 8c defining an acute corner. It is to be noted that before joining the sheets 4 and 6 together, a very thin film, such as 0.1 micron thick film, of $SiO_2$ is deposited on each of the sides 4b and 6b above the window 8 to provide a very narrow gap, such as 0.2 micron gap, between the sides 4b and 6b above the window 8. Such a gap above the acute corner 8c of the window 8 is referred to as a head gap. In contrast to the head gap, a similar gap is provided between the sides 4b and 6b below the window 8, and it is referred to as a back gap. In Fig. 5, solid lines 12 and 14 represent the head and back gaps, respectively.

A further detail of the manner how the sheets 4 and 6 are joined together is disclosed in the above described U.S. Patent Application Ser. No. 231,321 or in corresponding German Patent Offenlegungsschrift 31 03 767.

The reinforcing cores 20 and 30 have the same structure with each other and each having a thickness of about 100 to 110 microns, which is determined in consideration of a space between upper and lower cylinders (not shown) provided in a video tape recorder. The reinforcing core, e.g. 20, is formed by a rectangular magnetic plate, such as a ferrite plate 22, and a non-magnetic member, such as a glass member 26.

The ferrite plate 22 is defined by four sides 22a, 22b, 22c and 22d with a rectangular recess 24 formed approximately at the center of the upper side 22a. According to the preferred embodiment, the ferrite plate 22 is formed by a single crystal ferrite material such that the sides 22a and 22d coincide with the crystal faces (110) and (100), respectively, and a front face of the ferrite plate 22 coincides with the crystal face (110), so as to improve the reproducing ability. Instead of using the single crystal, it is possible to use a polycrystalline ferrite.

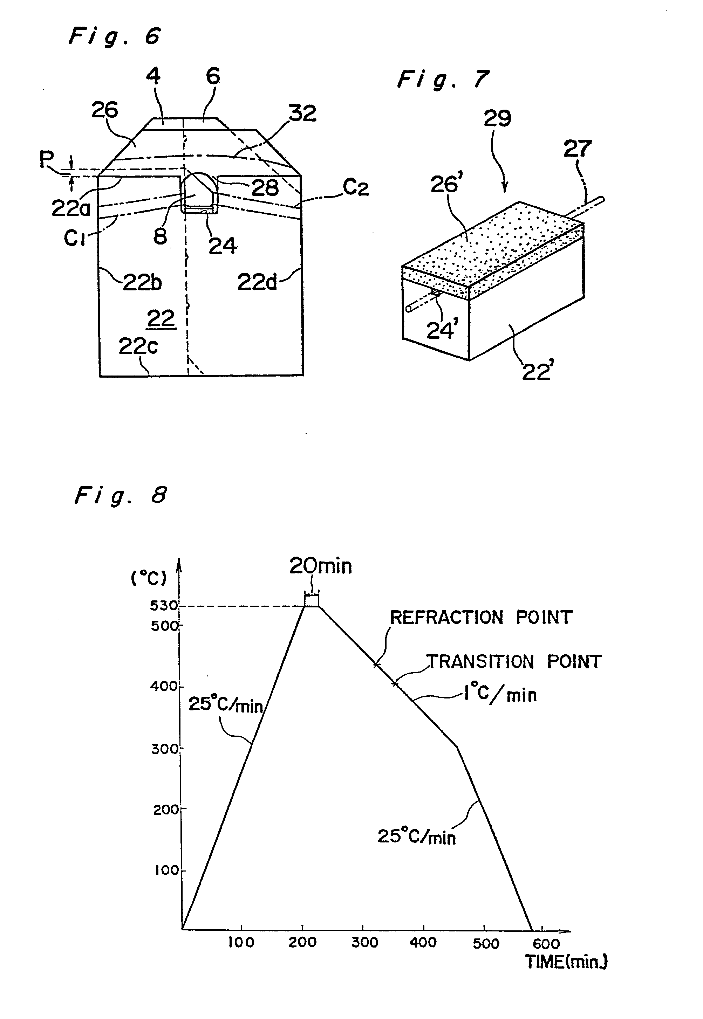

When the reinforcing core 20 is placed on the center sendust core 2, as shown in Fig. 6, the recess 24 aligns with the window 8 formed in the sendust core 2. Here, it is to be noted that the size of the recess 24 is greater than the window 8. This facilitates the winding of coils (not shown) as section C1 and C2 through the window 8. Furthermore, as apparent from Fig. 6, the left-hand vertical side of the recess 24 is located on the left-hand side of the left-hand edge of the window 8. In other words, an imaginary line extending from the head gap traverses the window 8. This prevents the shortcircuit of magnetic circuit at a proximate area of acute corner 8c of the window 8. Moreover, a distance P between the acute corner 8c of the window 8 and the upper side 22a of the ferrite plate 22 is selected to be about 100 to 200 microns. This distance P is determined in consideration of rigid structure and function of the ferrite plate 22.

Referring again to Fig. 5, the glass member 26 has a trapezoid configuration and is rigidly mounted on the upper side 22a of the ferrite plate 22. According to the preferred embodiment, the glass member 26 employed comprises the components of PbO, $SiO_2$, $K_2O$, NaO, $Sb_2O_3$ and $B_2O_3$ with the weight percentage of 59.5, 32.5, 7.12, 0.25, 0.49 and 0.14, respectively, and it has the softening point of 530°C, and thermal expansion coefficient of $102.0\times10^{-7}$. The glass member 26 shown has an arcuate projection 28 which extends downwardly from approximately the center of its base line for the engagement with the recess 24 formed in the ferrite plate 22. Although the rigid mounting of the glass member 26 on the ferrite plate 22 can be carried out by the use of a suitable bonding agent, preferably it is carried out by the following steps.

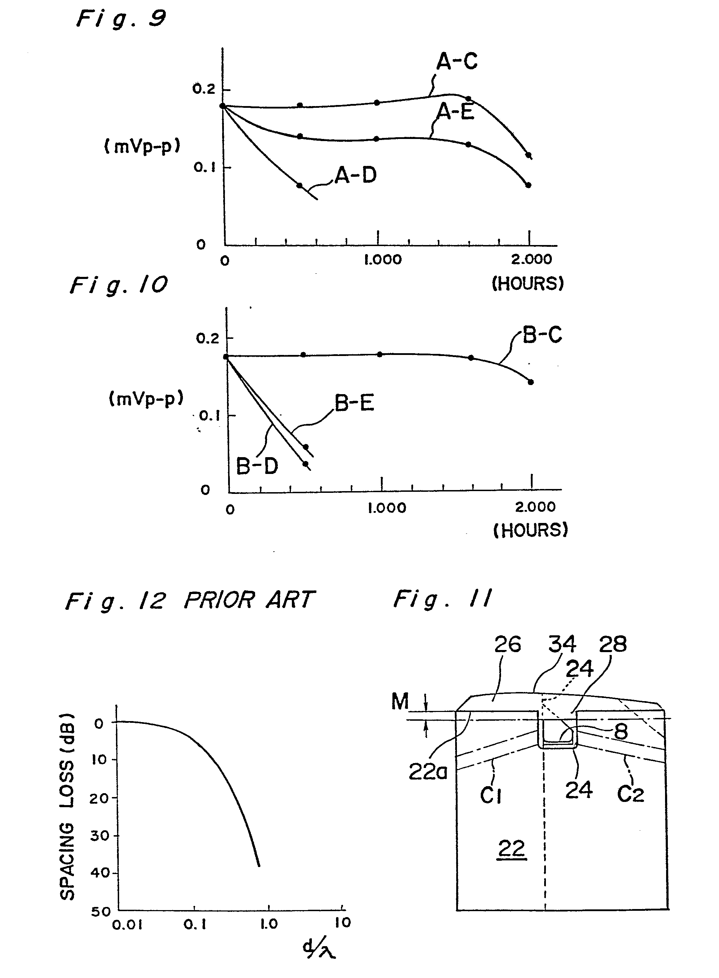

Referring to Fig. 7, first, a glass plate 26' of the above specified type is placed on an elongated ferrite block 22', having a rectangular cross-section groove 24' formed therein. The glass plate 26' and the ferrite block 22' are temporarily held together to define a composite block 29. A cylindrical rod 27 is tightly and slidingly inserted into a through-hole defined by the groove 24' and the glass plate 26'. Thereafter, the composite block 29 receiving the rod 27 is put in an electric furnace (not shown) in which the composite block 29 is heated according to a programmed temperature, as shown in Fig. 8, under an atmospheric pressure. When the temperature of the composite block 29 reaches the softening temperature (530°C), the glass plate 26' is softened, and accordingly, the glass plate 26' is tightly adhered to the ferrite block 22' by way of welding and, at the same time, a region of the glass plate 26' located above the groove 24' droops downwardly into the groove 24' covering the rod 27 by the gravity force. Thereafter, when the composite block 29 is cooled down to the room temperature, it is taken out from the furnace, and the rod 27 is removed defining a projection on the glass plate 26' that fittingly engages in the groove 24'. Then, the corners of the glass plate 26' are cut off and the block 29 is sliced into thin films to present a plurality of reinforcing cores 20.

It is to be noted that the reinforcing core 30 has exactly the same structure as the reinforcing core 20 and is prepared by the same steps described above for the core 20.

Thereafter, the sendust core 2 and the reinforcing cores 20 and 30 thus prepared are placed one over the other in such a manner as to sandwich the sendust core 2 between the reinforcing cores 20 and 30, as shown in Fig. 6. Then, these three cores 2, 20 and 30 are bonded together by a suitable permeable organic adhesive intruded between the joining faces. When the cores 2, 20 and 30 are bonded together, its tapered end is grinded down to a curved broken line 32 shown in Fig. 6, to percent a tape contact face 34, as best shown in Fig. 1. According to the preferred embodiment, the tape contact face 34 is curved not only when viewed from front along the line 32 but also it is curved when viewed from side, as best shown in Fig. 4. Furthermore, in the grinding step, the tape contact face 34 of the sendust core 2 is made in flush, or in slightly projected relation, with the tape contact face of the glass member 26. To complete the magnetic transducer, a suitable wire, e.g., a wire having a diameter of 0.03 to 0.04 mm, is wound at the sections C1 and C2 for 25 turns.

According to the present invention, the material for the glass member 26 is selected in consideration of the type of sendust employed for the center core 2, such that the amount of abrasion of the glass is greater than that of the sendust. In other words, the sendust core 2 has a higher abrasiveness resistivity than the glass member 26. When the material for the glass member 26 and for the sendust core 2 is selected according to the above principle, the upper end face of the sendust core 2 can be maintained in flush with, or in projected relation with, the grinded face of the glass member 26, even after a long period of operation, thus preventing no space between the magnetic tape that slides over the magnetic transducer and upper end face of the sendust core 2. In summary, the selection of material for the sendust core 2 and for the glass member 26 is based not on the hardness of these members 2 and 26, but only on their abrasion amount. The above fact will become more apparent from the result of the tests explained below.

In the first test, the present inventors prepared two samples of sendust cores A and B having different abrasion amount. They further prepared three samples of glass members C, D and E having different abrasion amount. It is to be noted that the components of the glass member C is identical to the glass member 26 explained above. According to the tests, the above samples are adopted in turn in a standard video tape recorder loaded with a so-called chromium tape, which slidingly runs over the magnetic transducer mounted with the test piece. The relative speed between the tape and the magnetic transducer is 6.9 m/s. For each sample, the amount of abrasion is measured after running the tape for a predetermined period of time, and the measured abrasion amounts are evaluated by normalizing the abrasion amount for the sendust core A as 100. A table shown below gives the result of the first test detecting the abrasion amount of each sample.

| Sample | Abrasion amount | Vicker's hardness |
|--------|-----------------|-------------------|
| Sendust A | 100 | 440 |
| Sendust B | 105 | 460 |
| Glass C | 119 | 356 |
| Glass D | 92 | 402 |
| Glass E | 98 | 451 |

In the first test, the hardness of each sample was measured through Vicker's hardness test, and the obtained hardness is also shown in the above table for the comparison between the abrasion amount and hardness. As apparent from the table, the abrasion amount has no relation with the hardness.

In the second test, three magnetic transducers were prepared, all employing sendust A for the center core 2, but for the glass member 26 in the reinforcing cores 20 and 30, the first magnetic transducer employed glass C, the second employed glass D and the third employed glass E. The three magnetic transducers were adopted in turn in the video tape recorder and output characteristic was measured relative to the time. The result of the second test is shown in a graph of Fig. 9 in which abscissa represents time in hours and ordinate represents maximum voltage (peak to peak voltage) of reproduced signal having 4 MHz. In the graph, curves A—C, A—D and A—E represent output characteristics obtained when the above described first, second and third magnetic transducers, respectively, are employed.

Similarly, in the third test, three magnetic transducers were prepared, all employing sendust B for the center core 2, but for the glass member 26, the first magnetic transducer employed glass C, the second employed glass D and the third employed glass E. These three magnetic transducers were tested in the same manner as in the second test, and the obtained results are shown in a graph if Fig. 10, in which abscissa and ordinate represent hours and maximum voltage, respectively. In the graph of Fig. 10, curves B—C, B—D, and B—E represent respectively output characteristics obtained from the above described first, second and third magnetic transducers prepared for the third test.

As apparent from the graphs curves A—C and B—C show almost constant output level in the first 1500 hours. Whereas other curves slope down in a first short hours of time, only the curve A—E shows a constant output level after being sloped down to some degrees.

When the results shown in Figs. 9 and 10 are evaluated in consideration of the result of the first test shown in the above table, it can be said that the acceptable results (curves A—C and B—C) are obtained when the material for the glass member 26 is so selected as having abrasion amount greater than that of the material employed for the sendust core 2. In other words, the material for the glass member 26 is so selected as having smaller abrasiveness resistivity than the material for the sendust core 2. Furthermore, as apparent from the above table, the above evaluation does not necessarily mean that the acceptable results are obtained when the material for the glass member 26 is less harder than the material for the sendust core 2. If this is true, a reasonable result should be obtained for the combination of sendust A and glass D, or for the combination of sendust B and glass D. In fact, in the graphs of Figs. 9 and 10, such combinations show very poor result.

As has been described fully in the foregoings, the magnetic transducer according to the present invention comprises a center core 2 and reinforcing cores 20 and 30 each containing glass member which is so selected as having a less abrasiveness resistivity than that of the center core 2. When this structure is taken, the center core 2 will not wear down below the face of the reinforcing cores 20 and 30, and thus, the center core 2 can be held in contact with the running tape even after a long period of operation. Furthermore, the face of the magnetic transducer that contacts with the tape is curved not only in the direction of tape advance, as shown in Fig. 2, but also in the tape's widthwise direction, as shown in Fig. 4. Accordingly, the contact pressure between the center core 2 and the running tape can be increased, resulting in an improvement in recording and reproducing abilities.

Also, according to the present invention, the glass member 26 is provided with a projection 28 which fittingly engages in the recess 24 formed in the ferrite plate 22. Accordingly, the glass member 26 is rigidly secured on the ferrite plate 22, increasing the resistivity against external force applied thereto in direction K1 or K2 (Fig. 2) by the running tape.

It is to be noted that such a projection 28 can be formed in any shape other than the arcuate, such as rectangular, as shown in Fig. 11, so long as the projection fittingly engages in the recess 24, but leaving a sufficient space in the recess 24 to permit the coil winding therethrough.

It is also to be noted that when such a projection 28 is provided, the upper side 22a of the ferrite plate 22 can be located close to the tape contact fcae 34 resulting in the increase of ferrite region. When compared with the prior art, the magnetic transducer according to the present invention has the upper side 22a located closer to the tape contact face 34 by a distance M, resulting in the decrease of distance between the head gap 24 and the ferrite plate 22, and this in turn results in decrease of magnetic resistance.

**Claims**

1. A magnetic transducer comprising:
   a center core (2) of a material having a large saturation flux density ($B_s$), said center core (2) having an opening (8) formed therein for winding coil means through and a head gap (12) extending from said opening (8) to one side (4a, 6a) of said center core (2);

a pair of reinforcing cores (20, 30) each comprising a glass member (26) and a plate (22) made of magnetic material, said magnetic plate (22) fixedly connected to said glass member (26) and receiving a recess (24) formed therein at an intermediate portion of a side which is held in contact with said glass member (26), said recess (24) defining a window together with said glass member (26), said window being aligned with said opening (8) for receiving said coil means;

said pair of reinforcing cores (20, 30) sandwiching said center core (2) such that the glass members (26) are located on opposite sides, respectively, of the center core (2) where said head gap (12) is formed, and that said one side of the center core (2) is flush with, or projects from, respective side faces of said glass members (26); characterized in that each of the glass members (26) has an abrasiveness resistivity which is smaller than that of the center core (2) and is formed with a projection (28) which engages in said recess (24) formed in said magnetic plate (22) for the rigid connection between the magnetic plate (22) and the glass member (26).

2. A magnetic transducer as claimed in claim 1, characterized in that said center core (2) is made of sendust.

3. A magnetic transducer as claimed in claim 1 or 2, characterized in that an imaginary line extending from said head gap (12) traverses said window (24) thereby preventing a shortcircuit across the head gap (12) by said magnetic plate (22).

4. A magnetic transducer as claimed in any one of Claims 1 to 3, characterized in that said connection between said glass member (26) and magnetic plate (22) is effected by the deposition of adhesive material.

5. A magnetic transducer as claimed in any one of Claims 1 to 3, characterized in that said connection between said glass member (26) and magnetic plate (22) is effected by welding.

6. A magnetic transducer as claimed in Claim 5, wherein said projection (28) is formed by melting effected during said welding.

7. A method for manufacturing a reinforcing core (20, 30) for use in a magnetic transducer such that a center core (2) is fixedly sandwiched between a pair of reinforcing cores (20, 30), said method comprising the steps of:

preparing a rectangular ferrite block (22') having a groove (24') formed in its one surface;

preparing a rectangular glass sheet (26') having a predetermined softening temperature;

placing said rectangular glass sheet (26') over said rectangular ferrite block (22') on said one surface formed with said groove (24') to define a composite block, said groove (24') defining an elongated through-hole together with said glass sheet (26');

and subsequently comprising the steps of

shaping the composite block into a desired configuration; and

slicing said composite block along a plane perpendicular to said through-hole (24'); characterized in that it prior to the two last mentioned steps further comprises the steps of inserting a rod (27) through said through-hole (24');

heating said composite block according to a programmed temperature for welding said glass sheet (26') on said ferrite block (22') and for melting said glass sheet (26') to permit the droop down of a part of said glass sheet into said groove (24') over said rod (27); and

removing said rod (27).

**Patentansprüche**

1. Ein magnetscher Wandler mit:

einem Mittelkern (2) aus einem Material mit einer großen Sättigungsflußdichte ($B_s$) welcher eine Öffnung darin hat zum Aufwickeln einer Spule durch die Öffnung, und einem Kopfspalt (12), welcher sich von der Öffnung (8) zu einer Seite (4a, 6a) des Mittelkerns (2) erstreckt;

einem Paar von Verstärkungskernen (20, 30), die jeweils aus einem Glasteil (26) und einer Platte (22) aus magnetischem Material bestehen, wobei die magnetische Platte (22) fest mit dem Glasteil (26) verbunden ist und eine darin in einem Mittelteil einer Seite ausgebildete Ausnehmung (24) aufnimmt, die in Kontakt mit dem Glasteil (26) gehalten ist, wobei die Ausnehmung zusammen mit dem Glasteil (26) ein Fenster bildet, welches mit der Öffnung (8) zur Aufnahme der Spule fluchtet;

wobei das Paar von Verstärkungskernen (20, 30) den Mittelkern (2) zwischen sich einschließt, so daß die Glasteile (26) auf jeweils gegenüberliegenden Seiten des Mittelkerns (2) angeordnet sind, wo der Kopfspalt (12) ausgebildet ist, und daß die eine Seite des Mittelkerns (2) mit den jeweiligen Seitenflächen der Glasteile (26) bündig ist oder darüber vorsteht; dadurch gekennzeichnet, daß jedes der Glasteile (26) einen Abreibwiderstand hat, der geringer ist als der des Mittelkerns (2) und mit einem Vorsprung (28) ausgebildet ist, welcher in die Ausnehmung (24) in der Magnetplatte (22) eingreift für eine starre Verbindung zwischen der Magnetplatte (22) und dem Glasteil (26).

2. Wandler nach Anspruch 1, dadurch gekennzeichnet, daß der Mittelkern (2) aus Sendust besteht.

3. Wandler nach Anspruch 1 oder 2, dadurch gekennzeichnet, daß eine gedachte Linie von der Kopfspalte (12) aus das Fenster (24) kreuzt und dadurch einen Kurzschluß über die Kopfspalte (12) durch die Magnetplatte (22) verhindert.

4. Wandler nach einem der Ansprüche 1 bis 3, dadurch gekennzeichnet, daß die Verbindung zwischen dem Glasteil (26) und der Magnetplatte (32) durch Ablagerung eines Haftmittels bewirkt wird.

5. Wandler nach einem der Ansprüche 1 bis 3, dadurch gekennzeichnet, daß die Verbindung zwischen dem Glasteil (26) und der Magnetplatte (22) durch Schweißen bewirkt wird.

6. Wandler nach Anspruch 5, dadurch gekennzeichnet, daß der Vorsprung (28) durch ein Schmelzen während des Schweißens erzeugt wird.

7. Verfahren zum Herstellen eines Verstärkungskerns (20, 30) für einen magnetischen Wandler, so daß ein Mittelkern (2) fest zwischen einem Paar von Verstärkungskernen (20, 30) aufgenommen ist, mit den Verfahrensschritten:

Herstellen eines rechtwinkeligen Ferritblocks (22') mit einer Nut (24') in einer seiner Oberflächen;

Herstellen einer rechtwinkeligen Glasplatte (26') mit einer vorbestimmten Aufweichtemperatur;

Anordnen der rechtwinkeligen Glasplatte (26') auf dem rechtwinkeligen Ferritblock (22') auf der eine Flächen, die die Nut (24') aufweist, um einen zusammengesetzten Block zu bilden, wobei die Nut (24') zusammen mit der Glasplatte (26') eine langgestreckte Durchgangsöffnung bildet; und

mit den folgenden Verfahrensschritten:

Formen des zusammengesetzen Blocks in eine gewünschte Gestalt und

Schlitzen des zusammengesetzten Blocks entlang einer Ebene senkrecht zur Durchgangsöffnung (24');

dadurch gekennzeichnet, daß vor den beiden letztgenannten Verfahrensschritten zusätzlich die Verfahrensschritte vorgesehen sind:

Einfügen einer Stange (27) in die Durchgangsöffnung (24');

Aufheizen des zusammengestzten Blockes entsprechend einer programmierten Temperatur zum Schweißen der Glasplatte (26') aud dem Ferritblock (22') und zum Schmelzen der Glassplatte (26'), um ein Niedersinken eines Teils der Glasplatte in die Nut (24') über der Stange (27) zu erlauben; und

Entfernen der Stange (27).

**Revendications**

1. Transducteur magnétique comprenant:

un noyau central (2) fait d'un matériau qui possède une grande densité de flux à saturation ($B_s$), ledit noyau central (2) présentant une ouverture (8) destinée à l'enroulement d'une bobine et un intervalle de tête (12) qui va de ladite ouverture (8) à un côté (4a, 6a) dudit noyau central (2);

deux noyaux de renforcement (20, 30) comprenant chacun un élément de verre (26) et une plaque (22) faite en un matériau magnétique, ladite plaque magnétique (22) étant liée à demeure audit élément de verre (26) et recevant un évidement (24) en une partie intermédiaire d'un côté qui est maintenu en contact avec ledit élément de verre (26), ledit évidement (24) définissant une fenêtre avec ledit élément de verre (26), ladite fenêtre étant alignée avec ladite ouverture (8) afin de recevoir ladite bobine;

les deux noyaux de renforcement (20, 30) prenant en sandwich ledit noyau central (2) de façon que les éléments de verre (26) soient placés respectivement de part et d'autre du noyau central (2) où ledit intervalle de tête (12) est formé, et que ledit côté du noyau central (2) affleure avec les faces latérales respectives desdits éléments de verre (26) ou en fasse saillie;

caractérisé en ce que chacun des éléments de verre (26) possède une résistance à l'abrasion qui est inférieure à celle de noyau central (2) et est doté d'une partie saillante (28) qui vient en prise dans ledit évidement (24) formé dans la plaque magnétique (22) afin d'établir une connexion rigide entre la plaque magnétique (22) et l'élément de verre (26).

2. Transducteur magnétrique selon la revendication 1, caractérisé en ce que ledit noyau central (2) est fait de Sendust.

3. Transducteur magnétique selon la revendication 1 ou 2, caractérisé en ce qu'une ligne imaginaire partant dudit intervalle de tête (12) traverse ladite fenêtre (24) de façon à empêcher qu'un court-circuit ne soit établi sur l'intervalle de tête (12) par ladite plaque magnétique (22).

4. Transducteur magnétique selon l'une quelconque des revendications 1 à 3, caractérisé en ce que ladite liaison entre l'élément de verre (26) et la plaque magnétique (22) est effectuée par le dépôt d'un matériau adhésif.

5. Transducteur magnétique selon l'une quelconque des revendications 1 à 3, caractérisé en ce que ladite liaison entre l'élément de verre (26) et la plaque magnétique (22) est effectuée par soudage.

6. Transducteur magnétique selon la revendication 5, où ladite partie saillante (28) est formée par une fusion effectuée pendant ledit soudage.

7. Procédé de fabrication d'un noyau de renforcement (20, 30) destiné à être utilisé dans un transducteur magnétique tel qu'un noyau central (2) est pris en sandwich à demeure entre deux noyaux de renforcement (20, 30), ledit procédé comprenant les opérations suivantes:

préparer un bloc de ferrite rectangulaire (22') qui possède une rainure (24') dans l'une de ses faces;

préparer une feuille de verre rectangulaire (26') qui présente une température de ramollissement prédéterminée;

placer ladite feuille de verre rectangulaire (26') au-dessus dudit block de ferrite rectangulaire (22') sur ladite face dotée de ladite rainure (24') afin de définir un block composite, ladite rainure (24') définissant un trou passant allongé avec ladite feuille de verre (26');

et comprenant ensuite les opérations suivantes:

donner au bloc composite une configuration voulue; et

découper ledit block composite suivant un plan perpendiculaire audit trou passant (24'); caractérisé en ce que, avant les deux opérations mentionnées en dernier, il comprend en outre les opérations suivantes:

insérer une tige (27) dans ledit trou passant (24');

chauffer ledit bloc composite suivant une température programmée afin de souder ladite feuille de verre (26') sur ledit block de ferrite (22') et de faire fondre ladite feuille de verre (26') afin de permettre qu'une partie de ladite feuille de verre s'écoule dans ladite rainure (24') au-dessus de ladite tige (27); et

retirer ladite tige (27).

0 061 069

**Fig. 1**

34
26
2
30
20
22

**Fig. 3**

30
20 2

**Fig. 4**

34
26
30 { 26
22
20 { 26
22
30
22
2

**Fig. 2**

34
K1 →
26
← K2
8
C1
24
C2
22
20
IV
IV

**Fig. 5**

2
4a 6a
4e 6e
20
10 12
4d
8c 8a
8 8b
10
4b 8b
6b
26
10
28
24 14
22a
10
22b
4 6
22
10
26
30
26
28
24
22
6d
22c
4c 6c

*Fig. 6*

*Fig. 7*

*Fig. 8*

Fig. 9

Fig. 10

Fig. 12 PRIOR ART

Fig. 11

3